# FASCICULE DE BREVET EUROPEEN

(11) **EP 1 529 077 B1**
(45) Date de publication et mention de la délivrance du brevet: **12.09.2018**
(21) Numéro de dépôt: 03766253.3
(22) Date de dépôt: 22.07.2003
(51) Int. Cl.: C08L 21/00, B60C 1/00

(54) **COMPOSITION DE CAOUTCHOUC POUR BANDE DE ROULEMENT DE PNEUMATIQUE**
KAUTSCHUKZUSAMMENSETZUNG FUR REIFENLAUFFLACHE
RUBBER COMPOSITION FOR THE THREAD CAP OF A PNEUMATIC TYRE

(30) Priorité: 29.07.2002 FR 0209630
(43) Date de publication de la demande: 11.05.2005
(73) Titulaire: Compagnie Générale des Etablissements Michelin, 63000 Clermont-Ferrand (FR)
(72) Inventeur: LABAUZE, Gérard, F-63100 Clermont-Ferrand (FR); MATHIEU, Samuel, 69001 Lyon (FR)
(74) Mandataire: Sidhu, Alban
(86) Numéro de dépôt international: PCT/EP2003/007971
(87) Numéro de publication internationale: WO 2004/013221

(56) Documents cités:
- EP-A- 0 899 297
- EP-A- 1 050 547
- EP-A2- 0 899 297
- JP-A- H10 204 216
- US-A- 5 252 649
- US-A- 6 121 392
- US-A- 6 121 392
- US-B1- 6 245 873
- PATENT ABSTRACTS OF JAPAN vol. 1998, no. 13, 30 novembre 1998 (1998-11-30) & JP 10 204216 A (YOKOHAMA RUBBER CO LTD:THE), 4 août 1998 (1998-08-04)

## Description

La présente invention concerne une composition de caoutchouc réticulable ou réticulée qui est utilisable pour constituer une bande de roulement d'enveloppe de pneumatique présentant une résistance à l'usure améliorée, une telle bande de roulement et une enveloppe de pneumatique incorporant cette bande de roulement. L'invention s'applique notamment à des enveloppes de pneumatique de type tourisme.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que des bandes de roulement, et afin d'obtenir des pneumatiques possédant une résistance au roulement réduite.

Parmi les nombreuses solutions proposées pour réduire l'hystérèse de compositions de bande de roulement et, par conséquent, la résistance au roulement de pneumatiques comportant de telles compositions, on peut par exemple citer les compositions décrites dans les documents de brevet US-A-4 550 142, US-A-5 001 196, EP-A-299 074 ou EP-A-447 066.

On a également cherché à améliorer l'adhérence des pneumatiques en utilisant des compositions de caoutchouc pour bande de roulement incorporant des plastifiants spécifiques.

Le document de brevet européen EP-A-1 028 130 décrit ainsi une composition de caoutchouc pour bande de roulement de pneumatique qui est destinée à améliorer l'adhérence du pneumatique l'incorporant. Cette composition de caoutchouc comprend une résine polymérique obtenue par copolymérisation de dicyclopentadiène et de limonène. Les unités issues de la polymérisation du limonène peuvent être présentes indifféremment en quantité minoritaire ou majoritaire dans cette résine, comme le montrent les exemples de réalisation de ce document dans lesquels les résines ont été obtenues avec des fractions massiques de 32 % de limonène pour 68 % de dicyclopentadiène (exemples 1 à 9) ou bien de 67 % de limonène pour 33 % de dicyclopentadiène (exemple 10).

Les documents de brevet européens EP-A-1 063 246, EP-A-1 029 873, EP-A-990 669 et EP-A-1 077 223 décrivent également des compositions de caoutchouc pour bande de roulement de pneumatique qui sont destinées à améliorer l'adhérence des pneumatiques les incorporant. Ces compositions de caoutchouc comprennent chacune une résine polymérique obtenue par copolymérisation de quatre monomères constitués de dicyclopentadiène ou de diméthyl-dicyclopentadiène, de limonène, d'un hydrocarbure aromatique polycyclique (indène) et d'un hydrocarbure aromatique monocyclique (alkyl styrène ou vinyl toluène). Dans l'ensemble des exemples de réalisation de chacun de ces documents, les fractions massiques respectives des quatre monomères précités sont soit de 25 %, 25 %, 25 %, 25 %, soit de 12,5 %, 37,5 %, 25 %, 25 %.

En plus de cette réduction de la résistance au roulement et cette amélioration de l'adhérence, il est tout aussi souhaitable d'améliorer la résistance à l'usure des bandes de roulement de pneumatique et, par conséquent d'augmenter la durée de vie de ces derniers (cette résistance à l'usure améliorée ayant également pour effet de réduire dans le temps les débris au sol de pneumatiques dus au roulage et la quantité de pneumatiques usés qui sont destinés au recyclage, ce qui contribue à préserver l'environnement).

Relativement peu de solutions ont été proposées à ce jour pour améliorer cette résistance à l'usure. On peut par exemple citer les compositions décrites dans les documents de brevet JP-A-61 238501, EP-A-502728 ou EP-A-501227.

Or, il est bien connu de l'homme de l'art que l'amélioration d'une performance pour des pneumatiques est souvent obtenue au détriment des autres performances. A titre exemplatif, on peut citer l'utilisation dans des compositions de bande de roulement de polymères amorphes ou semi-cristallins présentant une température de transition vitreuse (Tg) ou de fusion élevée et une masse moléculaire réduite, utilisation qui a pour effet d'améliorer l'adhérence sur sols sec ou humide des pneumatiques correspondants mais également de pénaliser leur résistance à l'usure.

Le brevet EP-A-1 050 547 décrit une procédé de préparation de résines à base de limonène et de cyclopentadiène dont le pourcentage en poids est de 95/5 à 5/95, caractérisée par une température de transition vitreuse comprise entre 50°C et 220°C et une masse moléculaire Mw comprise entre 500 et 42,000. Ces résines sont incorporées dans des compositions de caoutchouc destinées à la fabrication de bandes de roulement de pneumatiques.

Le brevet JPH-A-10204216 décrit des résines copolymériques à bases de dipentène et styrène utilisées dans des compositions de caoutchoucs destinées à la fabrication de bandes de roulement.

Le brevet EP-A-0 899 297 divulgue des compositions élastomérique comprenant des résines hydrocarbonées, résines phénol-acétylene ou résines dérivées de rosines.

Le brevet US-A-6 121 392 se réfère à un procédé de préparation de résines polyterpéniques à base de β-pinène (45% en poids) et autres monomères tels que l'α-pinène ou le butylène caractérisées par une Tg comprises entre 88°C et 120°C et un poids moléculaire Mn compris entre 800 et 1,000 et destinées à la préparation d'adhésifs.

Le but de la présente invention est de proposer une composition de caoutchouc réticulable ou réticulée qui est utilisable pour constituer une bande de roulement d'enveloppe de pneumatique présentant une résistance à l'usure améliorée, et il est atteint en ce que les demanderesses viennent de découvrir d'une manière surprenante qu'une résine plastifiante de masse moléculaire moyenne en nombre allant de 400 à 2000 g/mol et de température de transition vitreuse supérieure à 50° C et inférieure à 120° C qui est constituée des unités issues de la polymérisation d'un terpène insaturé monocyclique, confère à une enveloppe de pneumatique dont la bande de roulement est constituée d'une composition de caoutchouc incorporant cette résine, une résistance à l'usure améliorée par rapport à celle d'enveloppes connues dont la bande de roulement comprend une huile plastifiante à titre de plastifiant, tout en conférant à cette enveloppe selon l'invention une résistance au roulement et une adhérence sur sols sec et humide qui est proche de celles de ces mêmes enveloppes connues.

On notera que la résine plastifiante selon l'invention permet de conférer une endurance améliorée à l'enveloppe de pneumatique l'incorporant dans sa bande de roulement, dans la mesure où elle améliore la résistance de l'enveloppe à la séparation des nappes sommet de triangulation qu'elle comporte dans son armature de sommet.

De préférence, ladite résine présente une masse moléculaire moyenne en nombre allant de 500 à 1000 g/mol et, à titre encore plus préférentiel, allant de 550 à 700 g/mol.

Egalement à titre préférentiel, ladite résine présente une température de transition vitreuse allant de 60° C à 100° C et, à titre encore plus préférentiel, allant de 65° C à 90° C.

Selon une autre caractéristique préférentielle de l'invention, ladite résine présente un indice de polymolécularité inférieur à 2.

Selon un premier mode de réalisation de l'invention, ledit terpène insaturé dont est totalement issue la résine est un terpène insaturé monocyclique, de préférence un limonène (i.e. méthyl-1 isopropényl-4 cyclohexène) tel que le d-limonène (énantiomère dextrogyre), ou bien le dipentène (racémique des énantiomères dextrogyre et lévogyre du limonène). Conformément à ce premier mode, la résine selon l'invention présente de préférence une température de transition vitreuse Tg allant de 60 à 80° C et, à titre encore plus préférentiel, allant de 65 à 75° C.

A titre d'exemples de telles résines selon ce premier exemple, on peut citer celles commercialisées par la société DRT sous le nom « Dercolyte L120 » et par la société ARIZONA sous les noms « Sylvares TR7125 » et « Sylvagum TR7125C », qui comprennent toutes des unités issues de la polymérisation du d-limonène ou du dipentène selon une fraction massique comprise entre 90 % et 100 %.

Ladite résine est constituée desdites unités issues de l'homopolymérisation dudit terpène insaturé monocyclique. Est avantageusement utilisable une résine issue en totalité de l'homopolymérisation du d-limonène ou du dipentène, de préférence une résine de masse moléculaire moyenne en nombre allant de 550 g/mol à 650 g/mol et une température de transition vitreuse allant de 60° C à 80° C.

On notera que le d-limonène est un extrait naturel (il se trouve à l'état naturel dans la peau des oranges) et que, par conséquent, la résine plastifiante issue de l'homopolymérisation de ce d-limonène est d'origine exclusivement naturelle, ce qui contribue à réduire la pollution de l'environnement lors du roulage de pneumatiques dont les bandes de roulement incorporent cette résine.

Selon une caractéristique préférentielle de l'invention, ladite composition de caoutchouc est à base d'un ou plusieurs élastomères diéniques issus chacun d'au moins un monomère diène conjugué ayant un taux molaire de motifs issus de diènes conjugués qui est supérieur à 50 %, et cette composition comprend ladite résine selon une fraction massique allant de 5 à 45 pce et, à titre encore plus préférentiel, selon une quantité allant de 15 à 30 pce (pce : parties en poids pour cent parties d'élastomère(s) diénique(s)).

Selon un exemple de réalisation de l'invention, ladite composition de caoutchouc comprend :
- selon une quantité supérieure à 40 pce et allant jusqu'à 100 pce, un ou plusieurs élastomères diéniques présentant chacun une température de transition vitreuse comprise entre -65° C et -10° C, et
- selon une quantité inférieure à 60 pce et allant jusqu'à 0 pce, un ou plusieurs élastomères diéniques présentant chacun une température de transition vitreuse comprise entre -110° C et -80° C.

Ledit ou lesdits élastomères diéniques dont la température de transition vitreuse est comprise entre -65° C et -10° C appartiennent au groupe constitué par des copolymères de styrène et de butadiène préparés en solution, des copolymères de styrène et de butadiène préparés en émulsion, des polyisoprènes naturels, des polyisoprènes de synthèse présentant un taux d'enchaînements cis-1,4 supérieur à 95 %, des copolymères de butadiène et d'isoprène (BIR), des copolymères de styrène et d'isoprène (SIR), des terpolymères de styrène, butadiène, isoprène (SBIR) et par un mélange de ces élastomères.

Ledit ou chaque élastomère diénique dont la température de transition vitreuse est comprise entre -110° C et -80° C (de préférence entre -105° C et -90° C) comprend des unités butadiène selon un taux égal ou supérieur à 70 % et est de préférence constitué d'un polybutadiène présentant un taux d'enchaînements cis-1,4 supérieur à 90 %.

Selon un mode préférentiel de réalisation de l'invention, ladite composition de caoutchouc comprend, à titre d'élastomère(s) diénique(s) dont la température de transition vitreuse est comprise entre -65° C et -10° C, au moins un copolymère de styrène et de butadiène préparé en solution qui présente une température de transition vitreuse comprise entre -50° C et -15° C, ou un copolymère de styrène et de butadiène préparé en émulsion présentant une température de transition vitreuse comprise entre -65° C et-30° C.

Selon un exemple de réalisation de l'invention, ladite composition de caoutchouc comprend ledit ou lesdits élastomères diéniques de température de transition vitreuse comprise entre -65° C et - 10° C selon une quantité de 100 pce, par exemple un coupage de plusieurs copolymères de styrène et de butadiène préparés en solution.

Selon une variante de réalisation de l'invention, ladite composition de caoutchouc comprend un coupage dudit ou desdits élastomères diéniques de température de transition vitreuse comprise entre -65° C et -10° C avec ledit ou lesdits élastomères diéniques de température de transition vitreuse comprise entre -110° C et -80° C.

Selon un premier mode de réalisation selon l'invention de cette variante, ladite composition comprend un coupage de l'un au moins desdits polybutadiènes présentant un taux d'enchaînements cis-1,4 supérieur à 90 % avec l'un au moins desdits copolymères de styrène et de butadiène préparés en solution.

Selon un second mode de réalisation selon l'invention de cette variante, ladite composition comprend un coupage de l'un au moins desdits polybutadiènes présentant un taux d'enchaînements cis-1,4 supérieur à 90 % avec l'un au moins desdits copolymères de styrène et de butadiène préparés en émulsion.

Selon un troisième mode de réalisation selon l'invention de cette variante, ladite composition comprend un coupage de l'un au moins desdits polybutadiènes présentant un taux d'enchaînements cis-1,4 supérieur à 90 % avec l'un au moins desdits polyisoprènes naturels ou de synthèse.

A titre de copolymère de styrène et de butadiène préparé en émulsion, on peut avantageusement utiliser des copolymères présentant une quantité d'émulsifiant variant sensiblement de 1 pce à 3,5 pce, par exemple les copolymères E-SBR comprenant respectivement 1,7 pce et 1,2 pce d'émulsifiant qui sont tous deux décrits dans le document de brevet européen EP-A-1 173 338 (voir paragraphe I. des exemples de réalisation contenus dans la description de cette demande).

Selon une autre caractéristique de l'invention, ladite composition de caoutchouc comprend en outre au moins une huile plastifiante extraite du pétrole de type paraffinique, aromatique ou naphténique, selon une quantité allant de 0 pce à 30 pce et, de préférence, allant de 0 pce à 15 pce.

Avantageusement, ladite composition de caoutchouc peut être totalement dépourvue de ladite huile plastifiante extraite du pétrole.

On notera que l'amélioration de la résistance à l'usure que confère la résine selon l'invention à l'enveloppe de pneumatique implique une réduction dans le temps du tassement par compression auquel est soumise en roulage la bande de roulement selon l'invention et, par conséquent, une réduction dans le temps de la perte en roulage de l'huile plastifiante extraite du pétrole, telle que l'huile aromatique.

Il en résulte une réduction encore accrue de la pollution de l'environnement lors du roulage, laquelle pollution est encore minimisée par la quantité réduite ou nulle d'huile qui est initialement présente dans la composition de bande de roulement selon l'invention.

Selon un mode avantageux de réalisation de l'invention, ladite composition de caoutchouc comprend en outre, selon une quantité allant de 10 pce à 40 pce, au moins un composé plastifiant non extrait du pétrole de type synthétique ou naturel, qui comprend au moins un triester d'acide gras de glycérol, de manière que l'ensemble constitué par ledit ou lesdits acides gras comprenne de l'acide oléique selon une fraction massique égale ou supérieure à 60 %.

Ce composé plastifiant à base dudit triester d'acide gras de glycérol permet de minimiser dans la bande de roulement de pneumatique l'incorporant, d'une part, l'exsudation en roulage par compression du plastifiant total (incluant ladite résine et éventuellement ladite huile plastifiante extraite du pétrole) et, d'autre part, la migration dudit plastifiant vers des mélanges adjacents à la bande de roulement, ce qui se traduit par un tassement et un durcissement également minimisés pour la bande de roulement et, par conséquent, par une conservation dans le temps des performances d'adhérence.

La composition selon l'invention comprend également une charge renforçante, selon une quantité pouvant varier de 50 à 150 pce.

Selon une autre caractéristique préférentielle de l'invention, ladite charge renforçante comprend une charge inorganique renforçante selon une fraction massique supérieure à 50 %.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Avantageusement, ladite charge inorganique renforçante est, en totalité ou tout du moins majoritairement, de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.

De préférence, on utilise une silice présentant des surfaces spécifiques BETou CTAB qui vont toutes deux de 80 m²/g à 260 m²/g.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-0735088 précitée.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

La charge renforçante selon l'invention comprend avantageusement un coupage de ladite charge inorganique renforçante avec du noir de carbone, la fraction massique de noir de carbone dans ladite charge renforçante étant préférentiellement choisie inférieure ou égale à 30 %.

Par exemple, les coupages noir/ silice ou les noirs partiellement ou intégralement recouverts de silice conviennent pour constituer la charge renforçante. Conviennent également des charges inorganiques renforçantes comprenant les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

A titre de charge inorganique renforçante, on peut également utiliser, à titre non limitatif,
- des alumines (de formule Al₃O₃), telles que les alumines à dispersibilité élevée qui sont décrites dans le document de brevet européen EP-A-810 258, ou encore
- des hydroxydes d'aluminium, tels que ceux décrits dans le document de brevet international WO-A-99/28376.

La composition de caoutchouc selon l'invention comprend en outre de manière classique, un agent de liaison charge inorganique renforçante / matrice élastomère (encore appelé agent de couplage), qui a pour fonction d'assurer une liaison (ou couplage) suffisante, de nature chimique et/ou physique, entre ladite charge inorganique et la matrice, tout en facilitant la dispersion de cette charge inorganique au sein de ladite matrice.

Par agent de couplage, on entend plus précisément un agent apte à établir une connexion suffisante, de nature chimique et/ou physique, entre la charge considérée et l'élastomère, tout en facilitant la dispersion de cette charge au sein de la matrice élastomère. Un tel agent de couplage, au moins bifonctionnel, a par exemple comme formule générale simplifiée " Y-T-X ", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage, d'efficacité variable, ont été décrits dans un très grand nombre de documents et sont bien connus de l'homme du métier. On peut utiliser en fait tout agent de couplage connu pour, ou susceptible d'assurer efficacement, dans les compositions de caoutchouc diénique utilisables pour la fabrication de pneumatiques, la liaison ou couplage entre une charge inorganique renforçante telle que de la silice et un élastomère diénique, comme par exemple des organosilanes, notamment des alkoxysilanes polysulfurés ou des mercaptosilanes, ou encore des polyorganosiloxanes porteurs des fonctions X et Y précitées.

Des agents de couplage silice/élastomère, notamment, ont été décrits dans un grand nombre de documents, les plus connus étant des alkoxysilanes bifonctionnels tels que des alkoxysilanes polysulfurés.

On utilise en particulier des alkoxysilanes polysulfurés, dits "symétriques" ou "asymétriques" selon leur structure particulière, tels que décrits par exemple dans les brevets US-A-3 842 111, US-A-3 873 489, US-A-3 978 103, US-A-3 997 581, US-A-4 002 594, US-A-4 072 701, US-A-4 129 585, ou dans les brevets plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357 qui énoncent en détail de tels composés connus.

Conviennent en particulier pour la mise en oeuvre de l'invention, sans que la définition ci-après soit limitative, des alkoxysilanes polysulfurés symétriques répondant à la formule générale (I) suivante:

(I) Z-A-Sₙ-A-Z,

dans laquelle:
- n est un entier de 2 à 8 (de préférence de 2 à 5);
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄ en particulier le propylène);
- Z répond à l'une des formules ci-après: 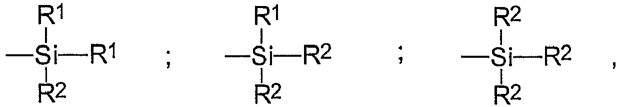 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence des groupes alkoxyle en C₁-C₈ ou cycloalkoxyle en C₅-C₈, plus préférentiellement des groupes alkoxyle en C₁-C₄, en particulier le méthoxyle et/ou l'éthoxyle).

Dans le cas d'un mélange d'alkoxysilanes polysulfurés répondant à la formule (I) ci-dessus, notamment des mélanges usuels disponibles commercialement, on comprendra que la valeur moyenne des "n" est un nombre fractionnaire, de préférence compris dans un domaine de 2 à 5.

Comme alkoxysilanes polysulfurés, on citera plus particulièrement les polysulfures (notamment les disulfures, trisulfures ou tétrasulfures) de bis-(alkoxyl(C₁-C₄)-alkyl(C₁-C₄)silylalkyl(C₁-C₄)), comme par exemple les polysulfures de bis(3-triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule [(C₂H₅O)₃Si(CH₂)₃S₂]₂ ou le disulfure de bis(triéthoxysilylpropyle), en abrégé TESPD, de formule [(C₂H₅O)₃Si(CH₂)₃S]₂. Le TESPD est commercialisé par exemple par la société Degussa sous les dénominations Si266 ou Si75 (dans le second cas, sous forme d'un mélange de disulfure (à 75% en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50 % en poids sur du noir de carbone), ou encore par la société Osi Specialties sous la dénomination Silquest A1289 (dans les deux cas, mélange commercial de polysulfures avec une valeur moyenne pour n proche de 4). On citera également les monoalcoxysilanes tétrasulfurés, tels que le tétrasulfure de monoéthoxydiméthylsilylpropyle (en abrégé MESPT), qui font l'objet de la demande de brevet international PCT/EP02/03774 au nom des demanderesses.

Les compositions conformes à l'invention comprennent également, outre le ou les élastomères diéniques, ladite résine plastifiante, éventuellement ladite huile plastifiante, ladite charge inorganique renforçante et éventuellement ledit agent de liaison, tout ou partie des autres constituants et additifs habituellement utilisés dans les compositions de caoutchouc, tels que des pigments, des anti-oxydants, des cires anti-ozonantes, un système de réticulation à base soit de soufre et/ou de peroxyde et/ou de bismaléimides, un ou plusieurs agents de recouvrement de la charge inorganique renforçante tels que des alkylalcoxysilanes, des polyols, des amines ou des amides.

On notera que le ou l'un au moins des élastomères diéniques utilisables dans la composition selon l'invention peut comporter un ou plusieurs groupes fonctionnels spécifiquement actifs pour un couplage à ladite charge renforçante.

Pour un couplage à une charge inorganique renforçante, conviennent tous les groupes fonctionnels, couplés ou étoilés qui sont connus de l'homme du métier pour un couplage à la silice. A titre non limitatif, conviennent :
- les groupes silanol ou polysiloxane ayant une extrémité silanol, comme cela est décrit dans le document de brevet français FR-A-2 740 778 au nom de la demanderesse. Plus précisément, ce document enseigne l'utilisation d'un agent de fonctionnalisation d'un polymère vivant obtenu par voie anionique, en vue d'obtenir une fonction active pour un couplage à de la silice. Cet agent de fonctionnalisation est constitué d'un polysiloxane cyclique, tel qu'un polyméthylcyclo -tri, -tétra ou - déca siloxane, ledit agent étant, à titre préférentiel, l'hexaméthylcyclotrisiloxane. Les polymères fonctionnalisés ainsi obtenus peuvent être séparés du milieu réactionnel conduisant à leur formation par extraction à la vapeur d'eau du solvant, sans que leur macrostructure et, par conséquent, leurs propriétés physiques n'évoluent ; et
- les groupes alkoxysilane.

On peut citer à ce titre la réaction de fonctionnalisation décrite dans le document de brevet international WO-A-88/05448 en vue d'un couplage à de la silice, qui consiste à faire réagir sur un polymère vivant obtenu par voie anionique un composé alkoxysilane ayant au moins un reste alkoxyle non hydrolysable. Ce composé est choisi parmi les halogénoalkylalkoxysilane.

On peut également citer le document de brevet français FR-A-2 765 882, au titre de l'obtention de fonctions alkoxysilane. Ce document divulgue l'utilisation d'un trialkoxysilane, tel que le 3-glycidyloxypropyltrialkoxysilane, pour la fonctionnalisation d'un polymère diénique vivant, en vue du couplage à du noir de carbone ayant de la silice fixée à sa surface à titre de charge renforçante majoritaire.

Pour un couplage à du noir de carbone, on peut par exemple citer des groupes fonctionnels comprenant une liaison C-Sn. De tels groupes peuvent être obtenus comme connu en soi par réaction avec un agent de fonctionnalisation de type organohalogénoétain pouvant répondre la formule générale R₃SnCl, ou avec un agent de couplage de type organodihalogénoétain pouvant répondre à la formule générale R₂SnCl₂, ou avec un agent d'étoilage de type organotrihalogénoétain pouvant répondre à la formule générale RSnCl₃, ou de type tétrahalogénoétain pouvant répondre à la formule SnCl₄ (où R est un radical alkyle, cycloalkyle ou aryle).

Pour un couplage au noir de carbone, on peut également citer des groupes fonctionnels aminés, par exemple obtenus en utilisant la 4,4'-bis-(diéthylaminobenzophénone), encore appelée DEAB. A titre d'exemple, on peut citer les documents de brevet FR-A-2 526 030 et US-A- 4 848 511.

Les compositions conformes à l'invention peuvent être préparées selon les procédés connus de travail thermo-mécanique des constituants en une ou plusieurs étapes. On peut par exemple les obtenir par un travail thermo-mécanique en une étape dans un mélangeur interne qui dure de 3 à 7 minutes, avec une vitesse de rotation des palettes de 50 tours par minute, ou en deux étapes dans un mélangeur interne qui durent respectivement de 3 à 5 minutes et de 2 à 4 minutes, suivies d'une étape de finition effectuée à environ 80° C, pendant laquelle sont incorporés le soufre et les accélérateurs de vulcanisation dans le cas d'une composition à réticuler au soufre.

Une bande de roulement d'enveloppe de pneumatique selon l'invention est telle qu'elle est constituée de ladite composition de caoutchouc conforme à l'invention.

Une enveloppe de pneumatique selon l'invention comporte cette bande de roulement.

On notera que la présente invention s'applique à tous types d'enveloppes de pneumatique, pouvant par exemple être destinées à équiper des véhicules à moteur ou non, tels que des automobiles de tourisme ou de compétition ou des véhicules à deux roues - incluant bicyclettes et véhicules légers à moteur tels que des motocyclettes - , des véhicules industriels choisis parmi camionnettes, "poids-lourd" - i.e. bus, engins de transport routier (camions, tracteurs, remorques), véhicules hors-la-route - , engins agricoles ou de génie civil, avions, autres véhicules de transport ou de manutention.

Les caractéristiques précitées de la présente invention, ainsi que d'autres, seront mieux comprises à la lecture de la description suivante de plusieurs exemples de réalisation de l'invention, donnés à titre illustratif et non limitatif.

### Détermination des masses moléculaires des résines selon l'invention par la technique de chromatographie d'exclusion par la taille (SEC) :

La chromatographie d'exclusion par la taille ou SEC permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier. Sans être une méthode absolue, la SEC permet d'appréhender la distribution des masses moléculaires des résines. A partir de produits étalons commerciaux de polystyrène de basse masse moléculaire (comprise entre 104 et 90000 g/mol), les différentes masses moyennes en nombre Mn et en poids Mp sont déterminées et l'indice de polydispersité Ip calculé. Chaque échantillon de résine est solubilisé dans du tétrahydrofurane à une concentration d'environ 1 g/l.

L'appareillage utilisé est un chromatographe « WATERS, modèle Alliance 2690 ». Le solvant d'élution est le tétrahydrofurane (phase mobile), le débit de 1 ml/min., la température du système de 35°C et la durée d'analyse de 40 min. On utilise pour la phase stationnaire un jeu de trois colonnes en série, de dénominations commerciales respectives « WATERS type STYRAGEL HR4E » (colonne à lit mélangé), « WATERS type STYRAGEL HR1 » (de porosité 100 Angstrom) et « WATERS STYRAGEL HR0.5 » (de porosité 50 Angstrom).

Le volume injecté de la solution de chaque échantillon de résine est 100 µl. Le détecteur est un réfractomètre différentiel « WATERS modèle 2410 » et le logiciel d'exploitation des données chromatographiques est le système « WATERS MILLENIUM » (version 3-2).

### Mesure des températures de transition vitreuse des élastomères et des plastifiants :

Les températures de transition vitreuse Tg des élastomères et des plastifiants ont été mesurées au moyen d'un calorimètre différentiel (« differential scanning calorimeter »).

Concernant les mesures de Tg pour les compositions de caoutchouc incorporant ces élastomères et ces plastifiants, on a procédé à des mesures dynamiques à une fréquence de 10 Hz et sous deux valeurs de contraintes différentes (0,2 MPa et 0,7 MPa), mesures « MDC » effectuées conformément à la norme ISO 4664 (le mode de déformation étant le cisaillement et les éprouvettes étant de forme cylindrique).

### Mesure des propriétés des compositions de caoutchouc :

- Viscosité Mooney : ML(1+4) à 100° C mesurée selon la norme ASTM D 1646 de 1999.
- Modules d'allongement MA100 (à 100 %) mesuré selon la norme ASTM D 412.
- Indice de cassage Scott : force à la rupture (MPa) et allongement (en %) mesurés à 23° C selon la norme ASTM D 412 de 1998.
- Dureté Shore A : mesurée selon la norme ASTM D 2240 de 1997.
- Pertes hystérétiques (PH) : mesurées en % par rebond à 60° C au sixième choc, selon la relation suivante : PH (%) = 100 x (W₀-W₁)/W₁, avec W₀ : énergie fournie et W₁ : énergie restituée.
- Propriétés dynamiques en cisaillement: mesurées selon la norme ASTM D 2231-71, approuvée à nouveau en 1977 (mesure en fonction de la déformation effectuée à 10 Hz avec une déformation crête-crête de 0,15 % à 50 %, et mesure en fonction de la température effectuée à 10 Hz sous une contrainte répétitive de 70 ou 20 N/cm² avec un balayage en température de -80 à 100° C).

### Mesure des performances des enveloppes de pneumatique :

On a utilisé des indices relatifs de performances, par rapport à un indice 100 de référence caractérisant une enveloppe « témoin » (un indice de performance supérieur à cette base 100 rendant compte d'une performance supérieure à celle de l'enveloppe « témoin » correspondante).
- La résistance au roulement de chacune des enveloppes testées a été mesurée par roulage sur un volant, à une température ambiante de 25° C, sous une charge de 392 daN et à une vitesse de 80 km/h, la pression interne de l'enveloppe étant de 2,1 bars, pour des enveloppes de dimensions 175/70 R14 « MXT ».
- La résistance à l'usure de chaque enveloppe a été déterminée au moyen d'un indice relatif d'usure qui est fonction de la hauteur de gomme restante, après roulage sur un circuit routier virageux, à une vitesse moyenne de 77 km/h et jusqu'à ce que l'usure atteigne les témoins d'usure disposés dans les rainures des bandes de roulement. On a obtenu cet indice relatif d'usure en comparant la hauteur de gomme restante d'une bande de roulement selon l'invention à la hauteur de gomme restante d'une bande de roulement « témoin », laquelle présente par définition un indice d'usure de 100.
- L'adhérence de chaque enveloppe de pneumatique testée a été évaluée par la mesure de distances de freinage en mode de freinage « ABS », à la fois sur sol sec et sur sol mouillé. Plus précisément, la distance de freinage en mode « ABS » a été mesurée, sur sol sec, en passant d'une vitesse de 70 km/h à 20 km/h et, sur sol mouillé (sol en béton poli avec 2 mm de hauteur d'eau en surface), en passant d'une vitesse de 40 km/h à 10 km/h.
- Le comportement sur sol mouillé de chaque enveloppe a été évalué par le temps mis pour parcourir un tour de circuit routier virageux et arrosé, une valeur attribuée de 101 correspondant au gain d'1 seconde sur ce tour de circuit.
- La résistance des enveloppes de pneumatique à la séparation des nappes sommet a également été évaluée au moyen d'indices relatifs de performance, par rapport à un indice 100 de référence caractérisant une enveloppe « témoin » (un indice de performance supérieur à cette base 100 rendant compte d'une performance supérieure à celle de l'enveloppe « témoin » correspondante).

Cette résistance a été mesurée par un test de roulage sur un volant, dont la surface est pourvue d'obstacles (barrettes et « polars » qui viennent solliciter les bords de la ceinture de l'enveloppe constituée de deux nappes sommet de travail NST1 et NST2), à une température ambiante de 20° C, sous une charge de 490 daN et à une vitesse de 75 km/h, la pression interne de l'enveloppe étant régulée à 2,5 bars. Ce test est stoppé lorsqu'on détecte une déformation de l'armature de sommet de l'enveloppe.

Chaque enveloppe a été préalablement « étuvée » (non montée) durant 4 semaines à 65° C.

Les résultats obtenus sont exprimés sous la forme d'une performance kilométrique (base 100 pour l'enveloppe « témoin »).

### EXEMPLE 1

### 1) Première résine R1 (comprenant près de 100 % d'unités issues de la polymérisation d'α-pinène) :

La résine R1, commercialisée par la société HERCULES sous le nom « R2495 », présente :
- un taux d'enchaînements aliphatiques de 97 %,
- un taux d'enchaînements aromatiques de 0 %,
- des masses moléculaires moyennes en nombre Mn et en poids Mw respectivement égales à 820 g/mol et 1060 g/mol, et
- une température de transition vitreuse Tg de 88° C.

### 2) Synthèse d'une seconde résine R1' selon l'invention (homopolvmère du limonène) :

On a pesé dans une boîte à gants (sous atmosphère inerte) 0,42g d'AlCl₃, que l'on place dans une bouteille « Steinie » sous azote. On introduit ensuite dans cette bouteille 50 ml de toluène anhydre, puis 50 ml de d-limonène pur (énantiomère dextrogyre) puis la bouteille est placée sous agitation dans un bain thermostaté à 25° C pendant 4 heures. On stoppe la réaction avec 3 ml d'acétylacétone, et on récupère la résine par coagulation dans le méthanol après rajout de 0,4 pce d'antioxydant phénolique « Etyl702 ».

Après séchage en étuve, on obtient une résine R1' jaune, pâle et translucide avec un rendement moyen de 67 %, des masses moléculaires moyennes en nombre Mn et en poids Mw respectivement de 585 g/mol et 866 g/mol et une température de transition vitreuse T_{g} de 68° C.

Cette résine R1' présente un taux d'enchaînements aliphatiques de 100 % et un taux d'enchaînements aromatiques de 0 %, et elle est exclusivement constituée d'unités limonène.

### 3) Compositions de bande de roulement selon l'invention I1, I1' comprenant respectivement ces résines R1, R1' en comparaison d'une composition «témoin» T1 sans résine :

Chacune de ces compositions T1, I1, I1' est destinée à constituer une bande de roulement d'une enveloppe de pneumatique de type « tourisme ». Le tableau 1 suivant contient :
- la formulation de chacune de ces compositions T1, I1, I1' ;
- les propriétés de chaque composition T1, I1 et I1' à l'état non réticulé et réticulé et les performances des enveloppes de pneumatique correspondantes de dimensions 175/70 R14 « MXT ».

**Tableau 1 :**

| | **Composition T1** | **Composition I1** | **Composition I1'** |
|---|---|---|---|
| **FORMULATION** | | | |
| Matrice élastomère | S-SBR A (57,5 pce) | S-SBR A (45 pce) | S-SBR A (45 pce) |
| | BR A (42,5 pce) | BR A (55 pce) | BR A (55 pce) |
| Charge renforçante 1 | Silice Zeosil | Silice Zeosil | Silice Zeosil |
| | 1165MP | 1165MP | 1165MP |
| | 80 pce | 80 pce | 80 pce |
| Charge renforçante 2 | Noir N234 | Noir N234 | Noir N234 |
| | 10 pce | 10 pce | 10 pce |
| Agent de liaison (« Si69 ») | 6,4 pce | 6,4 pce | 6,4 pce |
| Huile aromatique totale | 39,5 pce | 22,5 pce | 21 pce |
| Résine plastifiante R1 (α-pinène) | | 17 pce | |
| Résine plastifiante R1' (poly-limonène) | | | 18,5 pce |
| Acide stéarique / ZnO | 2/2,5 pce | 2/2,5 pce | 2 / 2,5 pce |
| Anti-oxydant (« 6PPD ») | 2 pce | 2 pce | 2 pce |
| DPG/soufre / accélérateur (« CBS ») | 1,5/1,0/2,0 pce | 1,5/1,0/2,0 pce | 1,5/1,0/2,0 pce |

| **PROPRIETES** | | | |
|---|---|---|---|
| ML(1+4) à 100° C | 102 | 97 | 103 |
| Shore A | 63 | 62 | 62 |
| MA100 à 23° C | 1,55 | 1,45 | 1,50 |
| Cassage Scott 23° C (Déformation en % / Contrainte en MPa) | 640 22,3 | 700 22,1 | 690 22,1 |
| PH à 60° C | 29,0 | 31,0 | 31,0 |

| **Propriétés dynamiques à 10 Hz, à 0,7MPa et 0.2MPa de contrainte** | | | |
|---|---|---|---|
| Tg (MDC sous 0,2 MPa) en ° C | -31,5 | -32,0 | -30,8 |
| Tg (MDC sous 0,7 MPa) en ° C | -20,8 | -21,1 | -21,1 |
| Max Tan delta (0,7 MPa) | 0,77 | 0,75 | 0,75 |

| **Propriétés dynamiques à 10 Hz, en déformation à 23°** C | | | |
|---|---|---|---|
| DELTA G*(G*-G*50 %) | 5,2 | 4,8 | 4,6 |
| Tan delta max (à environ 7 % de déformation) | 0,34 | 0,35 | 0,35 |

| **PERFORMANCES DES ENVELOPPES DE PNEUMATIQUE (175/70 R14 « MXT »)** | | | |
|---|---|---|---|
| **Résistance à l'usure** (à 8° C sur un sol mouillé à 37 %, pour une « Citroën XSARA 1,8i l ») | 100 | 111 | 112 |
| **Adhérence** (à 15° C pour une « Renault Laguna 21 ») | | | |
| - freinage sol sec ABS | 100 | 100 | 100 |
| - freinage sol mouillé ABS | 100 | 100 | 100 |
| **Comportement sol mouillé** (à 15° C, pour une « Golf 75 ») | 100 | 100 | 100 |
| **Résistance au roulement** (9,23 kg/ tonne) | 100 | 99 | 99 |

| **RESISTANCE D'ENVELOPPES 195/65 R14 «MXT» / SEPARATION NAPPES SOMMET** | | | |
|---|---|---|---|
| Performance kilométrique | 100 | 129 | 129 |

- Avec S-SBR A : copolymère de styrène et de butadiène préparé en solution présentant un taux d'enchaînements 1,2 de 58 %, un taux d'enchaînements styréniques de 25 %, une viscosité Mooney ML(1+4) à 100° C égale à 54, une quantité d'huile égale à 37,5 pce et une température de transition vitreuse Tg de -29° C.
- Avec BR A : polybutadiène présentant un taux très élevé d'enchaînements cis-1,4 d'environ 93 %, une température de transition vitreuse Tg de -103° C et une viscosité Mooney ML(1+4) à 100° C égale à 54.
- Avec 6PPD : N-(1,3-dimétyl-butyl)-N'-phényl-p-phénylènediamine, et
CBS : N-cyclohexyl-benzothiazyl-sulfénamide.

On notera que les Tg respectives des compositions I1 (ne couvrant pas l'invention) et I1' selon l'invention, sous une contrainte dynamique de module élevé (0,7 MPa), sont prévues sensiblement égales à la Tg correspondante de la composition « témoin » T1.

Comme on peut le voir au tableau 1, l'écart entre les Tg des compositions T1, I1 et I1' qui ont été mesurées sous une contrainte dynamique de module réduit, égal à 0,2 MPa, est très proche de l'écart entre les Tg desdites compositions T1, I1 et I1' qui ont été mesurées sous ladite contrainte de module élevé.

Cette absence de décalage entre les Tg lorsqu'on passe d'une contrainte de module élevé à une contrainte de module réduit traduit le fait que la résine R1 et la résine R1' sont chacune bien miscibles dans la matrice élastomère constituée par le S-SBR A et le BR A.

Ce tableau 1 montre aussi que l'incorporation de ces résines R1 (ne couvrant pas l'invention) ou R1' selon l'invention (de Mn comprise entre 500 et 1000 g/mol et de Tg comprise entre 60° C et 100° C) aux compositions respectives I1 et I1' confère aux enveloppes dont les bandes de roulement sont constituées de ces compositions une résistance à l'usure très améliorée par rapport à celle de la composition « témoin » T1 dépourvue de résine, tout en conservant pratiquement les performances d'adhérence et de résistance au roulement des enveloppes incorporant ladite composition T1 et en maintenant ou en améliorant les propriétés mécaniques (MA100 et cassage Scott) de ladite composition T1.

Ces résines R1 (ne couvrant pas l'invention) ou R1' selon l'invention confèrent également aux enveloppes correspondantes une endurance améliorée, dans la mesure où elles améliorent leur résistance à la séparation des nappes sommet de triangulation que chacune de ces enveloppes comporte dans son armature de sommet.

On notera également que les compositions I1 et I1' comprennent beaucoup moins d'huile aromatique que la composition T1, ce qui contribue à la protection de l'environnement en réduisant notablement la pollution résultant de l'exsudation de cette huile par les pneumatiques, cette exsudation étant en outre minimisée du fait de la résistance à l'usure accrue des pneumatiques de l'invention.

### EXEMPLE 2

### 1) Troisième résine R2 selon l'invention (comprenant près de 100 % d'unités issues de la polymérisation du limonène) :

La résine R2, commercialisée par la société DRT sous le nom « Dercolyte L120 », présente :
- un taux d'enchaînements aliphatiques de 100 %,
- un taux d'enchaînements aromatiques de 0 %,
- des masses moléculaires moyennes en nombre Mn et en poids Mw respectivement de 625 g/mol et 1010 g/mol, et
- une température de transition vitreuse Tg de 72° C.

### 2) Quatrième résine R2' selon l'invention (comprenant près de 100 % d'unités issues de la polymérisation du dipentène) :

La résine R3, résine commercialisée par la société ARIZONA sous le nom « Sylvagum TR7125C », présente :
- un taux d'enchaînements aliphatiques de 100 %,
- un taux d'enchaînements aromatiques de 0 %,
- des masses moléculaires moyennes en nombre Mn et en poids Mw respectivement de 630 g/mol et 950 g/mol, et
- une température de transition vitreuse Tg de 70° C.

### 3) Compositions de bande de roulement selon l'invention I2, I2' comprenant respectivement ces résines R2, R2' en comparaison d'une composition «témoin» T2 sans résine :

Chacune de ces compositions T2, I2, I2' est destinée à constituer une bande de roulement d'une enveloppe de pneumatique de type « tourisme ». Le tableau 2 suivant contient :
- la formulation de chacune de ces compositions T2, I2, I'2 ;
- les propriétés de chaque composition T2, I2, I'2 à l'état non réticulé et réticulé et les performances des enveloppes de pneumatique correspondantes de dimensions 175/70 R14 « MXT ».

**Tableau 2 :**

| | Composition T2 | Composition I2 | Composition I'2 |
|---|---|---|---|
| **FORMULATION** | | | |
| Matrice élastomère | S-SBR A (85pce) | S-SBR A (70pce) | S-SBR A (70pce) |
| | BR A (15pce) | BR A (30pce) | BR A (30pce) |
| Charge renforçante 1 | Silice Zeosil | Silice Zeosil | Silice Zeosil |
| | 1165MP | 1165MP | 1165MP |
| | 85pce | 85pce | 85pce |
| Charge renforçante 2 | Noir N234 5 pce | Noir N234 5 pce | Noir N234 5 pce |
| Agent de liaison (SI69) | 6,8 pce | 6,8 pce | 6,8 pce |
| Huile aromatique totale | 32,5pce | 12,5pce | 1,25pce |
| Résine plastifiante R2 | | 20pce | |
| Résine plastifiante R3 | | | 20pce |
| Acide stéarique / ZnO | 2/2,5 pce | 2/2,5 pce | 2/2,5 pce |
| Anti-oxydant (« 6PPD ») | 2 pce | 2 pce | 2 pce |
| DPG/soufre /accélérateur (« CBS »)° | 1,5/1,0/2,0 pce | 1,5/1,0/2,0 pce | 1,5/1,0/2,0 pce |

| **PROPRIETES** | | | |
|---|---|---|---|
| ML(1+4) à 100° C | 97 | 110 | 113 |
| Shore A | 69 | 68 | 69 |
| MA100 à 23° C | 1,95 | 1,90 | 2,0 |
| Cassage Scott 23° C (Déformation en % / Contrainte en MPa) | 530 21,1 | 540 22,7 | 570 23,9 |
| PH à 60° C | 29,5 | 31,0 | 32,0 |

| **Propriétés dynamiques à 10 Hz, à 0,7MPa et 0,2MPa de contrainte** | | | |
|---|---|---|---|
| Tg (MDC sous 0,2MPa) en ° C | -17,9 | -18,3 | -17,8 |
| Tg (MDC sous 0,7MPa) en ° C | -9,1 | -8,7 | -9,1 |
| Max Tan delta (0,7Mpa) | 0,90 | 0,88 | 0,85 |

| **Propriétés dynamiques à 10 Hz, en déformation à 23°C** | | | |
|---|---|---|---|
| DELTA G*(G*-G*50 %) | 5,6 | 5,4 | 6,0 |
| Tan delta max (à environ 7 % de déformation) | 0,38 | 0,39 | 0,40 |

| **PERFORMANCES DES ENVELOPPES DE PNEUMATIQUE (175/70 R14 « MXT »)** | | | |
|---|---|---|---|
| **Résistance à l'usure** | 100 | 112 | 110 |
| (à 10° C sur un sol mouillé à 24 %, pour une « Citroën Xantia 1,8 l ») | | | |
| **Adhérence** (à 18° C pour une « Renault Laguna 2 l ») | | | |
| - freinage sol sec ABS | 100 | 102 | 102 |
| - freinage sol mouillé ABS | 100 | 99 | 99 |
| **Comportement sol mouillé** (à 15° C, pour une « CLIO 1,6 l ») | 100 | 100 | 100 |
| **Résistance au roulement** (10,2 kg/tonne) | 100 | 99 | 98 |

On notera que les Tg respectives des compositions I2 et I2' selon l'invention, sous une contrainte dynamique de module élevé (0,7 MPa), sont prévues sensiblement égales à la Tg correspondante de la composition « témoin » T2.

Comme on peut le voir au tableau 2, l'écart entre les Tg des compositions T2, I2 et I2' qui ont été mesurées sous une contrainte dynamique de module réduit, égal à 0,2 MPa, est très proche de l'écart entre les Tg desdites compositions T2, I2 et I2' qui ont été mesurées sous ladite contrainte de module élevé.

Cette absence de décalage entre les Tg lorsqu'on passe d'une contrainte de module élevé à une contrainte de module réduit traduit le fait que la résine R2 et la résine R2' sont chacune bien miscibles dans la matrice élastomère constituée par le S-SBR A et le BR A.

Ce tableau 2 montre aussi que l'incorporation des résines R2 ou R2' selon l'invention (de Mn comprise entre 500 et 1000 g/mol et de Tg comprise entre 60° C et 100° C) aux compositions respectives I2 et I2' confère aux enveloppes dont les bandes de roulement sont constituées de ces compositions une résistance à l'usure très améliorée par rapport à celle de la composition « témoin » T2 dépourvue de résine, pratiquement sans pénaliser les performances d'adhérence sur sol sec et sur sol mouillé, de comportement sur sol mouillé et de résistance au roulement des enveloppes incorporant ladite composition T2, et en maintenant ou en améliorant les propriétés mécaniques (MA100 et cassage Scott) de ladite composition T2.

On notera également que les compositions I2 et I2' comprennent beaucoup moins d'huile aromatique que la composition T2 (la composition I2' ne comportant que 1,25 pce d'huile aromatique), ce qui contribue à la protection de l'environnement en réduisant notablement la pollution résultant de l'exsudation de cette huile par les pneumatiques, cette exsudation étant en outre minimisée du fait de la résistance à l'usure accrue des pneumatiques de l'invention.

## Revendications

1. Composition de caoutchouc réticulable ou réticulée qui est utilisable pour constituer une bande de roulement d'enveloppe de pneumatique présentant une résistance à l'usure améliorée, ladite composition comprenant une résine plastifiante de masse moléculaire moyenne en nombre allant de 400 à 2000 g/mol, **caractérisée en ce que** ladite résine est constituée des unités issues de la polymérisation d'un terpène insaturé monocyclique, et **en ce que** ladite résine présente une température de transition, mesurée selon la méthode décrite dans la partie expérimentale de la description, supérieure à 50° C et inférieure à 120° C.

2. Composition de caoutchouc selon la revendication 1, **caractérisée en ce que** ladite résine présente une température de transition vitreuse, mesurée selon la méthode décrite dans la partie expérimentale de la description, allant de 60° C à 100° C.

3. Composition de caoutchouc selon la revendication 1 ou 2, **caractérisée en ce que** ladite résine présente une masse moléculaire moyenne en nombre, mesurée selon la méthode décrite dans la partie expérimentale de la description, allant de 500 à 1000 g/mol.

4. Composition de caoutchouc selon une des revendications précédentes, **caractérisée en ce que** ladite résine présente un indice de polymolécularité, mesurée selon la méthode décrite dans la partie expérimentale de la description, inférieur à 2.

5. Composition de caoutchouc selon l'une des revendications 1 à 4, **caractérisée en ce que** ladite résine présente une température de transition vitreuse, mesurée selon la méthode décrite dans la partie expérimentale de la description, allant de 60° C à 80° C.

6. Composition de caoutchouc selon une des revendications précédentes, ladite composition étant à base d'un ou plusieurs élastomères diéniques issus chacun d'au moins un monomère diène conjugué ayant un taux molaire de motifs issus de diènes conjugués qui est supérieur à 50 %, **caractérisée en ce qu'**elle comprend ladite résine selon une fraction massique allant de 5 à 45 pce (pce : parties en poids pour cent parties d'élastomère(s)).

7. Composition de caoutchouc selon la revendication 6, **caractérisée en ce qu'**elle comprend ladite résine selon une quantité allant de 15 à 30 pce.

8. Composition de caoutchouc selon une des revendications précédentes, **caractérisée en ce qu'**elle comprend en outre, selon une quantité allant de 0 pce à 30 pce, au moins une huile plastifiante extraite du pétrole de type paraffinique, aromatique ou naphténique.

9. Composition de caoutchouc selon la revendication 8, **caractérisée en ce qu'**elle comprend la ou les huile(s) plastifiante(s) extraite(s) du pétrole selon une quantité allant de 0 pce à 15 pce.

10. Composition de caoutchouc selon la revendication 9, **caractérisée en ce qu'**elle est totalement dépourvue de ladite huile plastifiante extraite du pétrole.

11. Composition de caoutchouc selon une des revendications précédentes, ladite composition comprenant une charge renforçante, **caractérisée en ce que** ladite charge renforçante comprend une charge inorganique renforçante selon une fraction massique supérieure à 50 %.

12. Composition de caoutchouc selon la revendication 11, **caractérisée en ce que** ladite charge renforçante comprend un coupage de ladite charge inorganique renforçante avec du noir de carbone.

13. Composition de caoutchouc selon une des revendications précédentes, **caractérisée en ce qu'**elle comprend en outre, selon une quantité allant de 10 pce à 40 pce, au moins un composé plastifiant non extrait du pétrole de type synthétique ou naturel, qui comprend au moins un triester d'acide gras de glycérol, de manière que l'ensemble constitué par ledit ou lesdits acides gras comprenne de l'acide oléique selon une fraction massique égale ou supérieure à 60 %.

14. Composition de caoutchouc selon une des revendications précédentes, **caractérisée en ce que** ladite composition comprend :
- selon une quantité supérieure à 40 pce et allant jusqu'à 100 pce, un ou plusieurs élastomères diéniques présentant chacun une température de transition vitreuse comprise entre -65° C et -10° C, et
- selon une quantité inférieure à 60 pce et allant jusqu'à 0 pce, un ou plusieurs élastomères diéniques présentant chacun une température de transition vitreuse, mesurée selon la méthode décrite dans la partie expérimentale de la description, comprise entre -110° C et -80° C.

15. Composition de caoutchouc selon la revendication 14, **caractérisée en ce que** :
- ledit ou lesdits élastomères diéniques de température de transition vitreuse, mesurée selon la méthode décrite dans la partie expérimentale de la description, comprise entre -65° C et
- 10° C appartiennent au groupe constitué par des copolymères de styrène et de butadiène préparés en solution, des copolymères de styrène et de butadiène préparés en émulsion, des polyisoprènes naturels, des polyisoprènes de synthèse présentant un taux d'enchaînements cis-1,4 supérieur à 95 %, des copolymères de butadiène et d'isoprène, des copolymères de styrène et d'isoprène, des terpolymères de styrène, butadiène, isoprène et par un mélange de ces élastomères, et
- ledit ou lesdits élastomères diéniques de température de transition vitreuse, mesurée selon la méthode décrite dans la partie expérimentale de la description, comprise entre -110° C et -80° C comprennent des polybutadiènes à taux d'enchaînements cis-1,4 supérieur à 90 %.

16. Composition de caoutchouc selon la revendication 15, **caractérisée en ce qu'**elle comprend un coupage d'un polybutadiène présentant un taux d'enchaînements cis-1,4 supérieur à 90 %, à titre d'élastomère diénique de température de transition vitreuse, mesurée selon la méthode décrite dans la partie expérimentale de la description, comprise entre -110° C et -80° C, avec un copolymère de styrène et de butadiène préparé en solution, à titre d'élastomère diénique de température de transition vitreuse, mesurée selon la méthode décrite dans la partie expérimentale de la description, comprise entre -65° C et -10° C.

17. Bande de roulement d'enveloppe de pneumatique, **caractérisée en ce qu'**elle comprend une composition de caoutchouc réticulable ou réticulée selon une des revendications précédentes.

18. Enveloppe de pneumatique, **caractérisée en ce qu'**elle comporte une bande de roulement selon la revendication 17.

## Patentansprüche

1. Vernetzbare oder vernetzte Kautschukzusammensetzung, die zum Bilden einer Reifenmantellauffläche, die eine verbesserte Verschleißfestigkeit aufweist, verwendbar ist, wobei die Zusammensetzung ein klebrigmachendes Harz mit einem zahlenmittleren Molekulargewicht von 400 bis 2.000 g/mol umfasst, **dadurch gekennzeichnet, dass** das Harz aus den Einheiten gebildet ist, die aus der Polymerisation eines monocyclischen ungesättigten Terpens abgeleitet sind, und dadurch, dass das Harz eine Übergangstemperatur aufweist, die nach dem Verfahren, das in dem experimentellen Teil der Beschreibung beschrieben ist, gemessen ist, die höher als 50 °C und niedriger als 120 °C ist.

2. Kautschukzusammensetzung nach Anspruch 1, **dadurch gekennzeichnet, dass** das Harz eine Glasübergangstemperatur, die nach dem Verfahren, das in dem experimentellen Teil der Beschreibung beschrieben ist, gemessen ist, von 60 °C bis 100 °C aufweist.

3. Kautschukzusammensetzung nach Anspruch 1 oder 2, **dadurch gekennzeichnet, dass** das Harz ein zahlenmittleres Molekulargewicht, das nach dem Verfahren, das in dem experimentellen Teil der Beschreibung beschrieben ist, gemessen ist, von 500 bis 1.000 g/mol aufweist.

4. Kautschukzusammensetzung nach einem der vorhergehenden Ansprüche, **dadurch gekennzeichnet, dass** das Harz einen Polymolekularitätsindex, der nach dem Verfahren, das in dem experimentellen Teil der Beschreibung beschrieben ist, gemessen ist, von weniger als 2 aufweist.

5. Kautschukzusammensetzung nach einem der Ansprüche 1 bis 4, **dadurch gekennzeichnet, dass** das Harz eine Glasübergangstemperatur, die nach dem Verfahren, das in dem experimentellen Teil der Beschreibung beschrieben ist, gemessen ist, von 60 °C bis 80 °C aufweist.

6. Kautschukzusammensetzung nach einem der vorhergehenden Ansprüche, wobei die Zusammensetzung auf Basis von einem oder mehreren Dienelastomeren ist, die jeweils von mindestens einem konjugierten Dienmonomer abgeleitet sind, das ein Molverhältnis von Einheiten aufweist, die von konjugierten Dienen abgeleitet sind, das größer als 50% ist, **dadurch gekennzeichnet, dass** sie das Harz in einer Massenfraktion von 5 bis 45 pce (pce: Gewichtsteile pro hundert Teile Elastomer (e)) umfasst.

7. Kautschukzusammensetzung nach Anspruch 6, **dadurch gekennzeichnet, dass** sie das Harz in einer Menge von 15 bis 30 pce umfasst.

8. Kautschukzusammensetzung nach einem der vorhergehenden Ansprüche, **dadurch gekennzeichnet, dass** sie ferner in einer Menge von 0 bis 30 pce mindestens ein weichmachendes Öl, das aus paraffinischem, aromatischen oder naphthenischen Erdöl extrahiert ist, umfasst.

9. Kautschukzusammensetzung nach Anspruch 8, **dadurch gekennzeichnet, dass** sie das weichmachende Öl oder die weichmachenden Öle, das (die) aus dem Erdöl extrahiert ist (sind), in einer Menge von 0 bis 15 pce umfasst.

10. Kautschukzusammensetzung nach Anspruch 9, **dadurch gekennzeichnet, dass** sie völlig frei von dem weichmachenden Öl ist, das aus dem Erdöl extrahiert ist.

11. Kautschukzusammensetzung nach einem der vorhergehenden Ansprüche, wobei die Zusammensetzung einen verstärkenden Füllstoff umfasst, **dadurch gekennzeichnet, dass** der verstärkende Füllstoff einen anorganischen verstärkenden Füllstoff in einer Massenfraktion von über 50 % umfasst.

12. Kautschukzusammensetzung nach Anspruch 11, **dadurch gekennzeichnet, dass** der verstärkende Füllstoff einen Verschnitt des anorganischen verstärkenden Füllstoffs mit Ruß umfasst.

13. Kautschukzusammensetzung nach einem der vorhergehenden Ansprüche, **dadurch gekennzeichnet, dass** sie ferner in einer Menge von 10 bis 40 pce mindestens eine Weichmacherverbindung, die nicht aus Erdöl extrahiert ist, vom synthetischen oder natürlichen Typ umfasst, die mindestens einen Glycerol-Fettsäuretriester umfasst, derart, dass die Gruppe, die aus der Fettsäure oder den Fettsäuren gebildet ist, Ölsäure in einer Massenfraktion umfasst, die gleich oder größer als 60 % ist.

14. Kautschukzusammensetzung nach einem der vorhergehenden Ansprüche, **dadurch gekennzeichnet, dass** die Zusammensetzung umfasst:
- in einer Menge von mehr als 40 pce und bis zu 100 pce ein oder mehrere Dienelastomere, die jeweils eine Glasübergangstemperatur zwischen -65 °C und - 10 °C aufweisen, und
- in einer Menge von mehr als 60 pce und bis zu 0 pce ein oder mehrere Dienelastomere, die jeweils eine Glasübergangstemperatur, die nach dem Verfahren, das in dem experimentellen Teil der Beschreibung beschrieben ist, gemessen ist, zwischen -110 °C und -80 °C aufweisen.

15. Kautschukzusammensetzung nach Anspruch 14, **dadurch gekennzeichnet, dass**:
- der oder die Dienelastomere mit der Glasübergangstemperatur, die nach dem Verfahren, das in dem experimentellen Teil der Beschreibung beschrieben ist, gemessen ist, die zwischen -65 °C und -10 °C beträgt, zu der Gruppe gehören, bestehend aus Copolymeren aus Styrol und Butadien, die in Lösung hergestellt sind, Copolymeren aus Styrol und Butadien, die in Emulsion hergestellt sind, natürlichen Polyisoprenen, synthetischen Polyisoprenen mit einem Gehalt an cis-1,4-Bindungen von mehr als 95 %, Copolymeren aus Butadien und Isopren, Copolymeren aus Styrol und Isopren, Terpolymeren aus Styrol, Butadien, Isopren und aus einer Mischung dieser Elastomere, und
- der oder die Dienelastomere mit der Glasübergangstemperatur, die nach dem Verfahren, das in dem experimentellen Teil der Beschreibung beschrieben ist, gemessen ist, die zwischen -110 °C und -80 °C beträgt, Polybutadiene mit einem Gehalt an cis-1,4-Bindungen von mehr als 90 % umfassen.

16. Kautschukzusammensetzung nach Anspruch 15, **dadurch gekennzeichnet, dass** sie einen Verschnitt eines Polybutadiens, das einen Gehalt an cis-1,4-Bindungen von mehr als 90 % aufweist, als Dienelastomer mit einer Glasübergangstemperatur, die nach dem Verfahren, das in dem experimentellen Teil der Beschreibung beschrieben ist, gemessen ist, die zwischen -100 °C und -80 °C beträgt, mit einem Copolymer aus Styrol und Butadien, das in Lösung hergestellt ist, als Dienelastomer mit einer Glasübergangstemperatur, die nach dem Verfahren, das in dem experimentellen Teil der Beschreibung beschrieben ist, gemessen ist, die zwischen -65 °C und -10 °C beträgt, umfasst.

17. Reifenmantellauffläche, **dadurch gekennzeichnet, dass** sie eine vernetzbare oder vernetzte Kautschukzusammensetzung nach einem der vorhergehenden Ansprüche umfasst.

18. Reifenmantel, **dadurch gekennzeichnet, dass** er eine Reifenmantellauffläche nach Anspruch 17 aufweist.

## Claims

1. Crosslinkable or crosslinked rubber composition which can be used to form a tyre casing tread exhibiting an improved wear resistance, the said composition comprising a plasticizing resin with a number-average molecular weight ranging from 400 to 2000 g/mol, **characterized in that** the said resin is formed of the units resulting from the polymerization of an unsaturated monocyclic terpene and **in that** the said resin exhibits a transition temperature, measured according to the method described in the experimental part of the description, of greater than 50°C and less than 120°C.

2. Rubber composition according to Claim 1, **characterized in that** the said resin exhibits a glass transition temperature, measured according to the method described in the experimental part of the description, ranging from 60°C to 100°C.

3. Rubber composition according to Claim 1 or 2, **characterized in that** the said resin exhibits a number-average molecular weight, measured according to the method described in the experimental part of the description, ranging from 500 to 1000 g/mol.

4. Rubber composition according to one of the preceding claims, **characterized in that** the said resin exhibits a polydispersity index, measured according to the method described in the experimental part of the description, of less than 2.

5. Rubber composition according to one of Claims 1 to 4, **characterized in that** the said resin exhibits a glass transition temperature, measured according to the method described in the experimental part of the description, ranging from 60°C to 80°C.

6. Rubber composition according to one of the preceding claims, the said composition being based on one or more diene elastomers each resulting from at least one conjugated diene monomer having a molar content of units resulting from conjugated dienes which is greater than 50%, **characterized in that** it comprises the said resin according to a fraction by weight ranging from 5 to 45 phr (phr: parts by weight per hundred parts of elastomer(s)).

7. Rubber composition according to Claim 6, **characterized in that** it comprises the said resin according to an amount ranging from 15 to 30 phr.

8. Rubber composition according to one of the preceding claims, **characterized in that** it additionally comprises, according to an amount ranging from 0 phr to 30 phr, at least one plasticizing oil extracted from petroleum of paraffinic, aromatic or naphthenic type.

9. Rubber composition according to Claim 8, **characterized in that** it comprises the plasticizing oil(s) extracted from petroleum according to an amount ranging from 0 phr to 15 phr.

10. Rubber composition according to Claim 9, **characterized in that** it is completely devoid of the said plasticizing oil extracted from petroleum.

11. Rubber composition according to one of the preceding claims, the said composition comprising a reinforcing filler, **characterized in that** the said reinforcing filler comprises a reinforcing inorganic filler according to a fraction by weight of greater than 50%.

12. Rubber composition according to Claim 11, **characterized in that** the said reinforcing filler comprises a blend of the said reinforcing inorganic filler with carbon black.

13. Rubber composition according to one of the preceding claims, **characterized in that** it additionally comprises, according to an amount ranging from 10 phr to 40 phr, at least one plasticizing compound not extracted from petroleum of synthetic or natural type, which comprises at least one glycerol fatty acid triester, so that the assembly formed by the said fatty acid or acids comprises oleic acid according to a fraction by weight equal to or greater than 60%.

14. Rubber composition according to one of the preceding claims, **characterized in that** the said composition comprises:
- according to an amount of greater than 40 phr and ranging up to 100 phr, one or more diene elastomers each exhibiting a glass transition temperature of between -65°C and -10°C, and
- according to an amount of less than 60 phr and ranging down to 0 phr, one or more diene elastomers each exhibiting a glass transition temperature, measured according to the method described in the experimental part of the description, of between -110°C and -80°C.

15. Rubber composition according to Claim 14, **characterized in that**:
- the said diene elastomer or elastomers with a glass transition temperature, measured according to the method described in the experimental part of the description, of between -65°C and -10°C belong to the group formed by copolymers of styrene and butadiene which are prepared in solution, copolymers of styrene and butadiene which are prepared in emulsion, natural polyisoprenes, synthetic polyisoprenes exhibiting a content of cis-1,4- enchainments of greater than 95%, copolymers of butadiene and isoprene, copolymers of styrene and isoprene, terpolymers of styrene, butadiene and isoprene and by a mixture of these elastomers, and
- the said diene elastomer or elastomers with a glass transition temperature, measured according to the method described in the experimental part of the description, of between -110°C and -80°C comprise polybutadienes having a content of cis-1,4-enchainments of greater than 90%.

16. Rubber composition according to Claim 15, **characterized in that** it comprises a blend of a polybutadiene exhibiting a content of cis-1,4-enchainments of greater than 90%, as diene elastomer with a glass transition temperature, measured according to the method described in the experimental part of the description, of between -110°C and -80°C, with a copolymer of styrene and butadiene prepared in solution, as diene elastomer with a glass transition temperature, measured according to the method described in the experimental part of the description, of between -65°C and -10°C.

17. Tyre casing tread, **characterized in that** it comprises a crosslinkable or crosslinked rubber composition according to one of the preceding claims.

18. Tyre casing, **characterized in that** it comprises a tread according to Claim 17.
